# EUROPEAN PATENT APPLICATION

(11) **EP 2 998 433 A1**
(43) Date of publication of application: **23.03.2016**
(21) Application number: 15183875.2
(22) Date of filing: 04.09.2015
(51) Int. Cl.: D06F 58/28, D06F 58/24, D06F 25/00

(54) **CLOTHES DRYER AND DRYING METHOD THEREOF**

(30) Priority: 18.09.2014 CN 201410479955
(71) Applicant: BSH Hausgeräte GmbH, 81739 München (DE)
(72) Inventor: Birke, Henrik, 10407 Berlin (DE); Jia, Zeng, Wuxi (CN); Ziegler, Jörg, 81739 München (DE)

(57) **Abstract**

Disclosed is a drying method of a clothes dryer (10), wherein the clothes dryer (10) includes a control device, a barrel (4) that receives fabric to be dried, and a condensing device (8) in spatial communication with the barrel (4), wherein the condensing device (8) includes a cooling medium supply device (16), and the method includes determining a cooling medium supply rhythm in the drying process at least according to a temperature of a cooling medium (200). Also disclosed is a clothes dryer (10) that can implement the drying method. As the cooling medium supply rhythm varies according to different to-be-dried fabric information, drying efficiency can be ensured and a waste of the cooling medium (200) can be avoided.

## Description

The present invention relates to a method of drying fabric by a clothes dryer, and also relates to a clothes dryer that uses the drying method.

A clothes dryer generally has a barrel that receives fabric to be dried and a condensing device in spatial communication with the barrel. Process air, after being heated, encounters wet fabric in the barrel, evaporates moisture in the fabric, and becomes wet. The wet process air then enters into the condensing device. In the condensing device, the process air exchanges heat with a cooling medium at a lower temperature, and then the moisture therein is condensed and separated from the process air. The lower the temperature of the cooling medium is, the higher the condensation efficiency thereof is; on the contrary, the higher the temperature of the cooling medium is, the lower the condensation efficiency thereof is. Then, if the cooling medium at the same flow rate and rhythm is supplied regardless of the temperature of the cooling medium, the following drawbacks may be caused: when the temperature of the cooling medium is lower, it leads to a waste of the cooling medium; when the temperature of the cooling medium is higher, condensation may not be sufficient enough, and drying efficiency is low.

An object of the present invention is to make supply of the cooling medium adapt to the temperature thereof.

With respect to the object, the technical solution adopted in the present invention is: a drying method of a clothes dryer, wherein the clothes dryer includes a control device, a barrel that receives fabric to be dried, and a condensing device in spatial communication with the barrel, wherein the condensing device includes a cooling medium supply device, and the method includes: a) determining a temperature of a cooling medium; b) determining a cooling medium supply rhythm at least according to the determined temperature of the cooling medium; and c) in a drying process, supplying the cooling medium with the cooling medium supply rhythm determined in step b). The temperature of the cooling medium can be measured through a sensor. Meanwhile, the temperature generally refers to an original temperature before heat exchange.

As the cooling medium supply rhythm may be adjusted according to different temperatures, a waste of the cooling medium can be avoided and better drying efficiency can also be ensured.

In step b), information required for determining the cooling medium supply rhythm by the control device may also include fabric information, cooling medium unit flow, target drying time, target energy consumption and so on.

The cooling medium supply rhythm in step b) includes at least two cycles, each of which includes a unit duration and an interval of supply of the cooling medium determined at least according to the temperature of the cooling medium.

In step b), the lower the temperature of the cooling medium is, the smaller time proportion of the unit duration of supply of the cooling medium in each cycle accounts for the whole cycle. Even if use of the cooling medium is reduced, better condensation effects can be maintained as cooling efficiency is higher when the temperature of the cooling medium is lower.

As one possible improved solution, correspondence information between temperatures of the cooling medium and cooling medium supply rhythms is prestored in the control device. The prestored information includes multiple groups of cooling medium temperature intervals, each of which corresponds to one cooling medium supply rhythm. When the temperature of the cooling medium determined in step a) falls within a certain interval, the cooling medium supply rhythm in the drying process is determined according to a rhythm corresponding to the interval.

Preferably, the cooling medium is cooling water.

Preferably, in the drying process, the cooling medium supply rhythm varies with continuation of the drying.

Preferably, in the drying process, the control device continuously detects changes in in-barrel fabric information or changes in information of process air participating in the drying, and adjusts the cooling medium supply rhythm according to the changes in the in-barrel fabric information or the changes in information of process air participating in the drying.

The fabric information includes fabric weight and/or humidity; and the information of process air includes temperature and/or humidity.

Then, with continuation of the drying process, moisture content of the fabric is gradually reduced, and the control device can gradually reduce supply of the cooling medium, preferably, by extending a supply interval of the cooling medium supply device , or shortening a unit supply duration of the cooling medium supply device.

Preferably, in the drying process, the control device continuously calculates actual energy consumption and/or resource consumption, compares the actual energy consumption and/or resource consumption to preset target energy consumption and/or resource consumption, and adjusts the cooling medium supply rhythm accordingly, thereby to keep final energy consumption and/or resource consumption within a target value. Thus, final energy consumption and/or resource consumption can be controlled through the drying method, to make the final energy consumption and/or resource consumption within a relatively reasonable and environment-friendly range.

Another object of the present invention is to provide a clothes dryer which is more energy-saving and environment-friendly. With respect to the object, the technical solution adopted by the present invention is: a clothes dryer, including a control device, a barrel that receives fabric to be dried, and a condensing device in spatial communication with the barrel, wherein the condensing device includes a cooling medium supply device, wherein the control device is configured to be capable of controlling operation of the clothes dryer according to the drying method specified hereinabove.

The clothes dryer of the present invention includes various machines having a clothes drying function.

The present invention is further described below with reference to the accompanying drawing. In the drawing:
FIG. 1 is a schematic view of composition of a clothes dryer; and
FIG. 2 is a relation view between cooling medium supply rhythms and temperatures of a cooling medium.

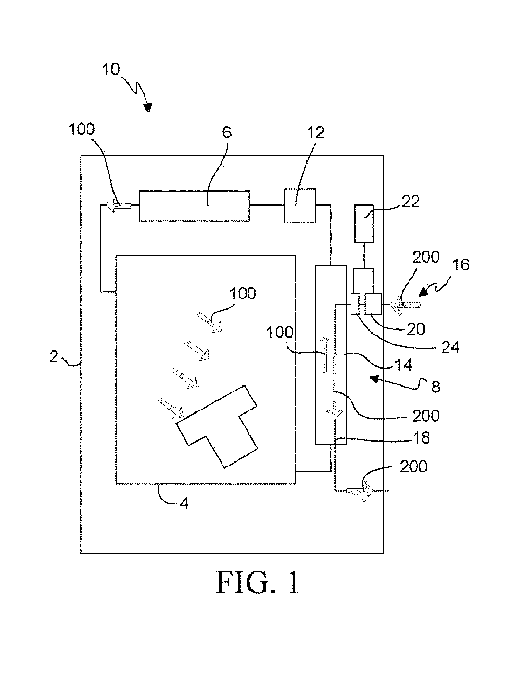

As shown in FIG. 1, a clothes dryer 10 has a cabinet 2 and a barrel 4 installed in the cabinet 2 and receiving clothes to be dried. Upstream and downstream of the barrel 4 are respectively in fluidic communication with an air heating device 6 and a condensing device 8. A blower device 12 is connected between the air heating device 6 and the condensing device 8, so as to urge the air to circulate among the barrel 4, the air heating device 6 and the condensing device 8.

The condensing device 8 includes a process air channel 14 and a cooling medium supply device 16. The cooling medium supply device 16 includes a cooling medium path 18 associated with the process air channel 14 in a heat-conduction manner and a supply element 20 installed on the cooling medium path 18. Whether the supply element 20 is opened is controlled by a control device 22. Meanwhile, the cooling medium path 18 is further provided with a detection device 24, which detects a normal temperature before the cooling medium exchanges heat with the process air. The detection device 24 is electrically connected with the control device 22, so as to send temperature information detected to the control device 22.

In a specific implementation manner of the condensing device 8, the cooling medium is water, the supply element 20 is a water valve, a part of the cooling medium path 18 outside the process air channel 14 is a water pipe, and a part thereof in the process air channel 14 may not have a separate pipeline, but extends downwards directly along inner walls of the process air channel 14, or sprays downwards in the process air channel 14.

In the drying process, process air 100, after being heated by the air heating device 6, enters into the barrel 4, and after contacting wet fabric therein, evaporates moisture contained in the fabric. The wet process air 100 then enters into the process air channel 14 of the condensing device 8, and exchanges heat therein with a cooling medium 200 in the cooling medium path 18, then the temperature of the process air 100 is decreased, and moisture therein is condensed and separated from the process air. Afterwards, the process air 100 becomes dry and re-enters into the air heating device 6, and enters next circulation after being heated, so as to be gradually separate the moisture from the fabric.

In the drying process, supply of the cooling medium 200 is determined by the supply element 20, and is controlled by the control device 22. The supply element 20 is opened/closed according to a certain rhythm, or provides the cooling medium 200 of which the flow rate is adjustable.

After a drying program is started, the detection device 24 detects an original temperature of the cooling medium 200, and sends the temperature information to the control device 22. The control device 22 may further need to determine in-barrel fabric information, for example, fabric quantity or weight, fabric moisture content, fabric material and other information. It is even likely to need to determine other information, for example, cooling medium flow velocity, target drying time, target energy consumption and so on.

After determination of the information, the control device 22 determines a rhythm of supply of the cooling medium 200 at least according to the determined normal temperature of the cooling medium 200; and in the subsequent drying process, supplies the cooling medium 200 with the determined rhythm of supply of the cooling medium.

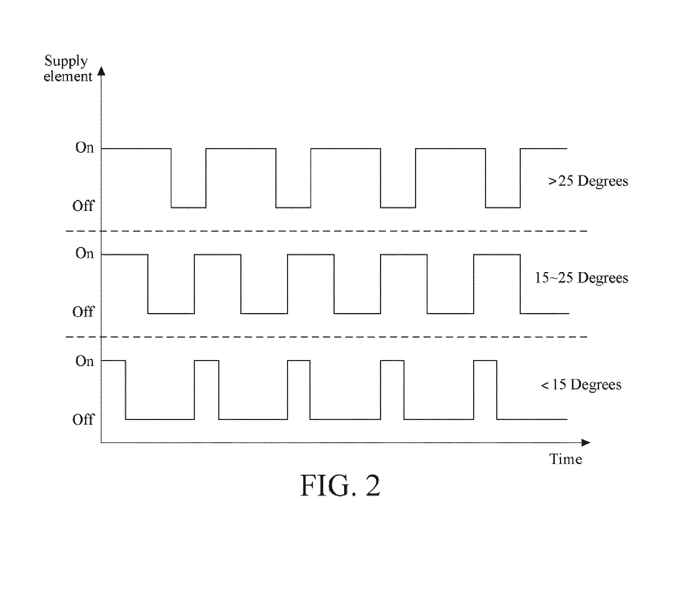

Specifically, in the implementation solution, correspondence information between temperatures of the cooling medium and cooling medium supply rhythms is prestored in the control device 22. As shown in FIG. 2, the cooling medium is divided into several intervals according to different temperatures, each of which corresponds to one cooling medium supply rhythm. The cooling medium supply rhythm includes at least two cycles, each of which includes a unit duration and an interval of supply of the cooling medium determined at least according to the temperature of the cooling medium, which is embodied in this embodiment as that each cycle includes opening time and closed time of the supply element 20. The correspondence information between the temperatures of the cooling medium and the cooling medium supply rhythms is pre-obtained through experiments. After the drying program is started, when the control device 22 determines that the temperature of the cooling medium falls within a certain interval, the cooling medium supply rhythm in the drying process is determined according to a rhythm corresponding to the interval.

It can be seen from FIG. 2 that, the lower the temperature of the cooling medium is, the smaller time proportion of the unit duration of supply of the cooling medium in each cycle accounts for the whole cycle. In this way, use of the cooling medium can be effectively reduced without affecting the drying efficiency.

As a preferred implementation manner, in the drying process, the control device 22 continuously detects changes in in-barrel fabric information or changes in information of process air participating in the drying, and adjusts the cooling medium supply rhythm according to the changes in the in-barrel fabric information or the changes in information of process air participating in the drying. The fabric information includes fabric weight and/or humidity; and the information of process air includes temperature and/or humidity. Then, with continuation of the drying process, moisture content of the fabric is gradually reduced, and the control device 22 can gradually reduce supply of the cooling medium. Reduction of supply of the cooling medium can be achieved by extending a supply interval of the cooling medium supply device or shortening a unit supply duration of the cooling medium supply device.

As a preferred implementation manner, a user can pre-select drying energy consumption and/or resource consumption, or target energy consumption and/or resource consumption are/is preset in the program. In the drying process, the control device 22 continuously calculates actual energy consumption and/or resource consumption, compares the actual energy consumption and/or resource consumption to preset target energy consumption and/or resource consumption, and adjusts the cooling medium supply rhythm accordingly, thereby to keep final energy consumption and/or resource consumption within a target value.

Various specific implementations described above and illustrated in the figures are merely used for describing the present invention, but are not all of the present invention. Any form of variations made to the present invention by those of ordinary skill in the art within the basic technical thought of the present invention should fall within the protection scope of the present invention.

## Claims

1. A drying method of a clothes dryer, wherein the clothes dryer comprises a control device, a barrel that receives fabric to be dried, and a condensing device in spatial communication with the barrel, wherein the condensing device comprises a cooling medium supply device, and the method comprises: a) determining a temperature of a cooling medium; b) determining a cooling medium supply rhythm at least according to the determined temperature of the cooling medium; and c) in a drying process, supplying the cooling medium with the cooling medium supply rhythm determined in step b).

2. The drying method according to claim 1, the cooling medium supply rhythm in step b) comprises at least two cycles, each of which comprises a unit duration and an interval of supply of the cooling medium determined at least according to the temperature of the cooling medium.

3. The drying method according to claim 2, **characterized in that**, in step b), the lower the temperature of the cooling medium is, the smaller proportion of the unit duration of supply of the cooling medium in each cycle accounts for of the whole cycle.

4. The drying method according to claim 1, **characterized in that**, correspondence information between temperatures of the cooling medium and cooling medium supply rhythms is prestored in the control device.

5. The drying method according to claim 4, **characterized in that**, the prestored information comprises multiple groups of cooling medium temperature intervals, each of which corresponds to one cooling medium supply rhythm.

6. The drying method according to claim 1, **characterized in that**, the cooling medium is cooling water.

7. The drying method according to claim 1, **characterized in that**, in the drying process, the cooling medium supply rhythm varies with continuation of the drying.

8. The drying method according to claim 7, **characterized in that**, in the drying process, the control device continuously detects changes in in-barrel fabric information and/or changes in information of process air participating in the drying, and adjusts the cooling medium supply rhythm according to the changes in the in-barrel fabric information and/or the changes in information of process air participating in the drying.

9. The drying method according to claim 8, **characterized in that**, the fabric information comprises fabric weight and/or humidity; and the information of process air comprises temperature and/or humidity.

10. The drying method according to claim 1, **characterized in that**, in the drying process, the control device continuously calculates actual energy consumption and/or resource consumption, compares the actual energy consumption and/or resource consumption to preset target energy consumption and/or resource consumption, and adjusts the cooling medium supply rhythm accordingly, to keep final energy consumption and/or resource consumption within a target value.

11. A clothes dryer, comprising a control device, a barrel that receives fabric to be dried, and a condensing device in spatial communication with the barrel, wherein the condensing device comprises a cooling medium supply device, **characterized in that**, the control device is configured to be capable of controlling operation of the clothes dryer according to the drying method according to any one of the preceding claims.
